# DEMANDE DE BREVET EUROPEEN

(11) **EP 3 337 122 A1**
(43) Date de publication de la demande: **20.06.2018**
(21) Numéro de dépôt: 16306689.7
(22) Date de dépôt: 15.12.2016
(51) Int. Cl.: H04L 29/06, G06Q 20/30, H04L 12/28

(54) **PROCÉDÉ ET SYSTÈME POUR EFFECTUER DES TRANSACTIONS SÉCURISÉES NOTAMMENT DANS L'INTERNET DES OBJETS**

(71) Demandeur: GEMALTO SA, 92190 Meudon (FR)
(72) Inventeur: DELSUC, Julien, 13881 GEMENOS Cedex (FR); COGNIAUX, Geoffroy, 13881 GEMENOS Cedex (FR)

(57) **Abrégé**

L'invention concerne un procédé pour sécuriser des transactions électroniques entre des appareils communicants (5-7) et des sites web (SM) à travers une passerelle (2) et/ou serveur (200) de communication ; Le procédé est caractérisé en ce qu'il comprend les étapes suivantes consistant à :
- équiper ladite passerelle (2) et/ou serveur (200) d'au moins un élément sécurise (SE), ledit élément (SE) comprenant en mémoire (17) une information de transaction et/ou d'identification pour effectuer une transaction et/ou une identification sur les sites web et/ou tout ou partie d'un programme de contrôle pour régir/contrôler lesdites transactions électroniques,
- puis à réaliser automatiquement lesdites transactions (4) en utilisant tout ou partie du programme de contrôle (11, 13) et/ou ladite l'information de paiement (9, 10) et/ou d'identification.

L'invention concerne également le système correspondant au procédé

## Description

### Domaine de l'invention.

L'invention concerne un procédé et un système pour sécuriser des transactions électroniques entre des appareils communicants et des sites web à travers une passerelle de communication ou un serveur.

Dans un proche avenir la plupart des appareils vont avoir tendance à être intelligents et connectés. Ils seront en mesure de prendre des décisions eux-mêmes en fonction notamment de règles dictées par un utilisateur ou un administrateur. Parmi ces décisions, ils devraient être amenés à acheter ou effectuer eux-mêmes une transaction relative à des biens ou des services.

Des exemples d'appareils intervenant comme consommateurs comprennent notamment un réfrigérateur se rechargeant automatiquement par des commandes de produits sur le Web, une imprimante se réapprovisionnant en cartouches d'encre, une voiture électrique acquittant une facture d'électricité, un glucomètre commandant des bandelettes de test, une chaudière prenant un rendez-vous d'entretien annuel, un téléviseur effectuant des locations de films, un appareil offrant des services haut de gamme après le paiement.

### Art antérieur

Une solution connue consiste à effectuer un paiement en ligne, soit en utilisant un tiers comme PayPal™ ou en enregistrant des données bancaires sur le site du constructeur de l'appareil. Ceci présente plusieurs inconvénients ci-après.

Les données bancaires sont distribuées sur le web augmentant ainsi le risque de fraude. En outre, la configuration d'achat automatique est dispersée sur plusieurs sites et chaque site propose des expériences utilisateur hétérogènes. Enfin, l'utilisateur peut perdre le contrôle de la décision et/ou de l'utilisation des données bancaires. Il perd également le contrôle des métadonnées (acte d'achat, nature de l'achat, etc..) puisque la prise de décision s'effectue dans le nuage informatique du constructeur.

Une autre solution pensée par les inventeurs peut consister à mettre un mécanisme d'achat à l'intérieur des appareils eux-mêmes. Cependant, cela augmente peut augmenter la complexité de ces appareils ainsi que leur coût ; Cela peut engendrer une expérience de configuration d'appareil également moins uniforme dans la mesure où chaque fabricant d'appareil a sa propre façon de faire (ses propres spécificités propriétaires). Et surtout, cela peut présenter des problèmes de sécurité.

### Objectif / Problème technique.

L'invention a pour objectif de résoudre les inconvénients susvisés.

Le problème est notamment de savoir comment effectuer ces paiements ou autre transaction quelconque tout en conservant une sécurité élevée par exemple en évitant une fuite de métadonnées. De préférence, l'invention propose un procédé et système ayant l'avantage d'apporter une expérience utilisateur simple et uniforme pour l'ensemble des appareils connectés.

L'invention vise également à permettre un contrôle des transactions plus adapté ou plus personnalisé pour chaque appareil.

Les transactions peuvent être contrôlées (régies) automatiquement (ou presque) selon les appareils. Le contrôle doit être souple et très pratique au niveau de son installation et/ou de sa mise à jour et/ou de son exploitation.

### Résumé de l'invention.

L'invention vise à proposer un procédé permettant à des appareils d'effectuer une transaction électronique en tirant parti de l'intelligence et capacité matérielle électronique d'une passerelle informatique (ou serveur informatique) à laquelle sont connectés différents appareils communicants.

L'invention propose de stocker les informations de transaction notamment d'identification et/ou bancaire à l'intérieur d'un élément sécurisé SE pouvant se présenter sous forme logicielle et/ou matérielle.

Elle propose selon un mode préféré d'exécuter ou de comprendre tout ou partie d'un code logiciel et/ou information de transaction pour effectuer une transaction, à l'intérieur de l'élément sécurisé. Alternativement, l'exécution ou une mémorisation de tout ou partie d'un code logiciel et/ou information de transaction s'effectue sous le contrôle ou supervision de l'élément sécurisé.

Ainsi, chaque transaction initiée, notamment par un appareil peut être effectuée de manière centralisée et en sécurité (même si chaque appareil peut être géré / contrôlé différemment selon une configuration propre préétablie).

A cet effet, l'invention a pour objet un procédé pour sécuriser des transactions électroniques entre des appareils communicants et des sites web à travers une passerelle ou serveur de communication, caractérisé en ce qu'il comprend les étapes suivantes :
- équiper ladite passerelle ou serveur informatique d'au moins un élément sécurise SE, ledit élément SE comprenant en mémoire une information de transaction et/ou d'identification pour effectuer une transaction et/ou une identification sur les sites web et/ou tout ou partie d'un programme de contrôle pour régir/contrôler lesdites transactions électroniques,
- puis à réaliser automatiquement lesdites transactions en utilisant tout ou partie du programme de contrôle et/ou ladite l'information de paiement et/ou d'identification.

Selon d'autres caractéristiques du procédé :
- Le programme de contrôle met en oeuvre des données et/ou un algorithme d'authentification pour authentifier chaque appareil lors de requête de transaction ;
- Le programme de contrôle peut mettre en oeuvre une étape de soumission de tout ou partie de la transaction à l'utilisateur via une interface locale et/ou via une interface d'un appareil de communication distant;
- la passerelle peut comprendre un agent informatique, ledit agent étant configuré pour intercepter les requêtes de transaction issues des appareils ou adressées à eux, pour en donner le contrôle le cas échéant, à l'élément sécurisé ;
- En particulier, des requêtes parvenant à un port E/S de la passerelle peuvent être stockées dans une mémoire dédiée. L'agent SE peut être averti d'un nouveau message et peut lire ou écrire ou extraire des informations pour traitement du contenu des messages.
- Les informations du message peuvent être traitées par le SE à la lumière de règles préétablies. Le traitement peut conduire à une décision autorisant ou non la requête de transaction ;
- La passerelle peut comprendre un programme traduisant des signaux reçus des appareils sur une interface en requêtes de transactions, le contrôle des demandes de transaction étant confié à l'élément sécurisé.

L'invention a également pour objet un système pour sécuriser des transactions électroniques entre des appareils communicants et des sites web à travers une passerelle ou serveur de communication, caractérisé en ce qu'il comprend :
- au moins un élément sécurisé SE, ledit élément SE comprenant une information de paiement et/ou d'identification pour effectuer un paiement et/ou une identification sur les sites web et un programme de contrôle pour régir / contrôler tout ou partie des transactions électroniques,
- ledit programme comprenant des instructions configurées pour réaliser automatiquement tout ou partie des transactions suivant le programme de contrôle et/ou mettre en oeuvre ladite l'information de paiement et/ou d'identification.

Selon d'autres caractéristiques du système :
- Il peut comprendre en mémoire des données et/ou un algorithme d'authentification configurés pour authentifier chaque appareil lors de requête de transaction et/ou chaque utilisateur ;
- Le programme de contrôle peut comprendre des instructions configurées pour soumettre tout ou partie de la transaction à l'utilisateur via une interface locale et/ou distante via un appareil de communication ;
- La passerelle peut comprendre un agent configuré pour intercepter les requêtes de transaction des appareils et pour en donner le contrôle à l'élément sécurisé.

### Brève description des figures.

- La figure 1 illustre un système pour sécuriser des transactions électroniques entre des appareils communicants selon un mode préféré de l'invention (Les éléments en pointillées sont optionnels);
- La figure 2 illustre la structure logicielle et matérielle de la passerelle 2 (ou optionnellement d'un serveur 200) conforme à un mode préféré de l'invention ;
- La figure 3 illustre selon un premier mode de mise en oeuvre du procédé, des interactions entre un agent 12-12B de la passerelle 2 et un élément sécurisé 7 au cours d'étapes du procédé de l'invention;
- La figure 4 illustre selon un second mode de mise en oeuvre du procédé, des interactions alternatives entre un agent 12-12B de la passerelle 2 et un élément sécurisé 7 au cours d'étapes du procédé de l'invention;
- La figure 5 illustre des étapes de fonctionnement du procédé de l'invention selon un troisième mode de mise en oeuvre du procédé de l'invention (pouvant s'appliquer ou se combiner aux modes précédents), dans lequel l'appareil 5-7 est plus intelligent ou a plus de fonction;
- La figure 6 illustre des étapes de fonctionnement du procédé de l'invention selon un quatrième mode de mise en oeuvre du procédé de l'invention (pouvant s'appliquer ou se combiner aux premier et second modes), dans lequel l'appareil 5-7 est moins intelligent ou a moins de fonction que le troisième mode.

### Description.

Dans les dessins, les mêmes références indiquent des éléments identiques ou similaires.

De même, dans la description et dessins, chaque étape du procédé peut correspondre à une étape (ou instruction) d'un programme informatique (et inversement). Un même effet que celui résultant d'une mise en oeuvre d'étapes, se produit lorsque des instructions d'un programme correspondant à ces étapes sont exécutées par un serveur informatique ou toute unité de traitement informatique quelconque tel un ordinateur, microprocesseur, ou microcontrôleur.

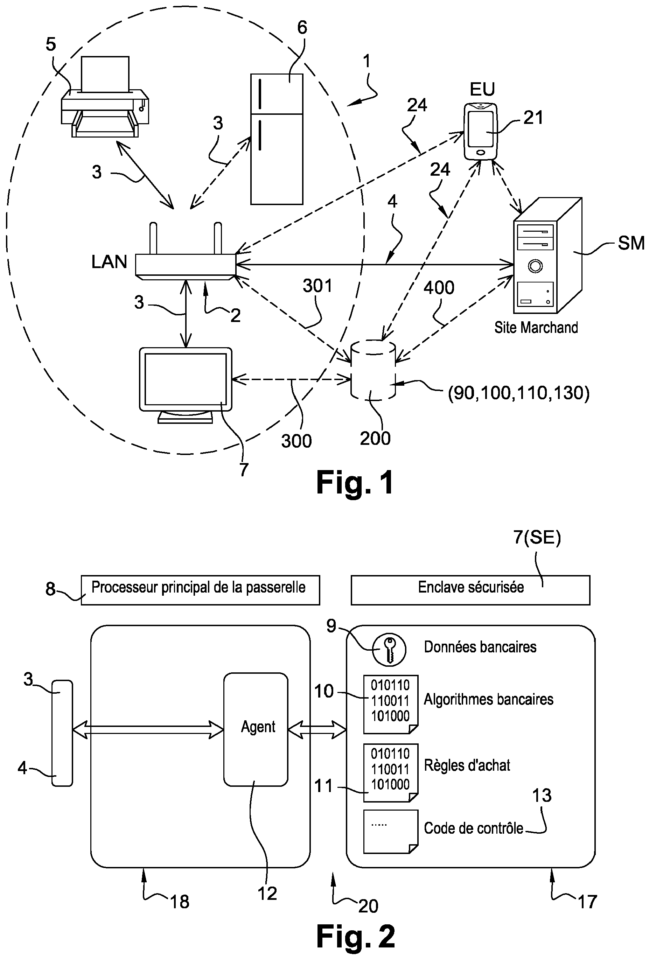

Les figures 1 et 2 illustrent un système pour sécuriser des transactions électroniques entre des appareils communicants 5-7 (dotés de moyens de communication 3,4 notamment via un réseau domestique ou d'entreprise, (WIFI, LAN, WLAN, internet, intranet, Bluetooth...) avec des sites web à travers une passerelle de communication 2.

La passerelle 2 est un dispositif de traitement informatique comprenant plusieurs interfaces de communication telles que Bluetooth™, Zigbee™, ZWave™, Ethernet, Wi-Fi™, NFC ou tout autre canal de communication. Elle comprend également un élément de sécurité (Secure Element). Même si le lieu privilégié de la passerelle peut être sur le réseau local (LAN), dans un mode de réalisation de l'invention, la passerelle peut être un serveur fonctionnant sur un réseau sans-fil (WLAN) ou un serveur distant (WAN, LPWAN). Dans le dernier cas, une passerelle locale peut retransmettre les messages provenant des appareils au serveur distant.

Dans l'exemple, le système 1 comprend une passerelle réseau 2 faisant la jonction entre au moins un réseau local 3 et un réseau pour longue distance 4. Les réseaux locaux peuvent être de diverses natures parmi une liste non exhaustive des technologies pouvant cohabiter : thread™, zigbee™, zwave™, Bluetooth™, Ethernet, wifi, USB,...

En outre, une transaction électronique au sens du mode préféré de l'invention, doit être entendue principalement comme une transaction financière. Toutefois, elle peut s'entendre également au sens large comme tout échange de communication, conduisant notamment à un accès physique et/ou logique, accès à un système de transport, à un bâtiment, à un site internet, à un service de télécommunication, commande quelconque de type domotique. La transaction peut être par exemple une demande d'achat, ou demande de prestation (maintenance, entretien, nettoyage, mise à jour, remplacement d'appareil, formation, support,...)

Sur le réseau local 3 e trouvent différents objets (ou appareils) 5-7 connectés tels qu'une imprimante 5, un téléviseur 7, un réfrigérateur 6.

Selon une caractéristique du mode préféré de l'invention, le système comprend un élément sécurisé SE. L'élément SE peut comprendre tout ou partie d'un programme de contrôle 13 pour régir/contrôler lesdites transactions électroniques. L'élément SE peut également ou alternativement comprendre une information de transaction et/ou d'identification pour effectuer une transaction et/ou une identification sur les sites web ou valider une transaction ou permettre une opération quelconque sur un serveur distant.

Les éléments sécurisés (SE) comprennent un circuit électronique comportant une mémoire, un microprocesseur et un système d'exploitation pour des traitements informatiques. De tels éléments de sécurité (SE) peuvent comporter une pluralité de mémoires de différents types.

Les éléments SE sont "sécurisés" notamment parce qu'ils sont en mesure de contrôler l'accès aux données qu'ils contiennent et d'autoriser ou non l'utilisation des données par d'autres machines. Les éléments sécurisés sont inviolables ou quasiment inviolables. Ils peuvent comprendre des moyens de contre mesure (notamment anti- DPA) pour empêcher leur auscultation.

Les éléments sécurisés peuvent également fournir des services de calcul basé sur des composants ou moyens cryptographiques. Ils peuvent comprendre des clés de sécurité ou des certificats d'authentification. En général, les éléments sécurisés contiennent des ressources informatiques limitées (capacité mémoire, capacité de traitement). Les éléments sécurisés (SE) peuvent être amovibles ou fixés sur un appareil hôte. Les cartes à puce sont des éléments sécurisés portables.

L'élément sécurisé peut contenir de préférence les données bancaires. Ces dernières peuvent comprendre soit un jeton de type bancaire notamment EMV généré par la carte bancaire ou un numéro intermédiaire PAN (Primary account number en anglais) notamment selon le standard EMV des cartes bancaires ou autre standard bancaire ou de paiement. Ils peuvent stocker un numéro d'identification bancaire tel IBAN ou équivalent ou un jeton dérivé de ce numéro. Ils peuvent comprendre ou mettre en oeuvre des moyens de génération d'un numéro à usage unique OTP ou un cryptogramme dynamique (DCVV).

Dans un mode de réalisation de l'invention, l'élément sécurisé peut de préférence exécuter tout ou partie d'un code logiciel (ou programme) de prise de décision.

Tout ou partie des codes logiciels critiques (ou sensibles) peuvent être de préférence mémorisés dans l'élément de sécurisé SE pour gérer par exemple une authentification, un montant maximal de transaction, une liste des fournisseurs;
L'élément sécurisé SE peut recevoir la main du contrôle des opérations pour la suite du procédé de la part d'un agent dans la passerelle hôte. Inversement, l'élément SE peut donner la main du contrôle à l'agent pour certaines opérations notamment non sensibles ou sans risque.

Par la suite dans la description, chaque fois que nous parlons de la passerelle, il peut s'agir en fait de l'élément sécurisé SE au sein de la passerelle.

Dans l'exemple (fig.2), l'élément sécurisé SE peut être sous forme de matérielle et/ou logicielle. Il constitue une enclave (zone ou environnement) sécurisée 7 apportée au système notamment au niveau de la passerelle. Cet élément sécurisé SE permet de protéger l'accès à tout ou partie du code et aux données de transaction mémorisés dans une mémoire 17 de la passerelle (ou mémorisées dans l'élément SE lui-même).

L'élément SE peut comprendre selon un mode préféré un programme de contrôle dont l'exécution des instructions permet de régir / contrôler tout ou partie des transactions électroniques.

Le programme de contrôle 13 peut comprendre des instructions configurées pour réaliser automatiquement lesdites transactions en utilisant tout ou partie du programme de contrôle et/ou ladite l'information de transaction (ou paiement) et/ou d'identification / authentification. L'élément SE peut également contrôler l'exécution de ce code.

Cet élément sécurisé 7 (SE) peut-être implémenté (réalisé) parmi l'une au moins des façons suivantes sous forme:
- D'un environnement d'exécution de confiance (TEE) logiciel (non illustré);
- D'un environnement d'exécution de confiance matériel (non illustré) utilisant des propriétés et des commandes fournies par le processeur pour sanctuariser le code et les données ;
- D'un élément sécurisé 7 du type (SE, eSE, SIM, UICC, eUICC, MIM), constitué par une puce séparée d'un processeur principal 8 de la passerelle et offrant des capacités de résistance à des attaques frauduleuses matérielles et logicielles ; Cet élément peut de préférence apporter une aide ou assistance (ou sous-traitance) à des opérations de cryptographie (chiffrement / déchiffrement) (illustré à la fig.2) ;
- D'un élément sécurisé 7 (non illustré) intégré dans le processeur principal 8 et ayant les mêmes propriétés et/ou fonctionnalités que l'item précédant mais intégré sur le même morceau de silicium (ou autre semi-conducteur) que le processeur principal 8.

Cet élément sécurisé SE comprend ou est destiné à mémoriser, de préférence tout ou partie des informations sensibles ci-après comprenant du code informatique (applications logicielle) et des données sensibles, à savoir (fig.2):
- Des données 9 nécessaires à tout ou partie de transactions notamment bancaires en ligne (notamment internet) sur un site marchand ou serveur;
- Des algorithmes cryptographiques 10 (et/ou des clés de chiffrement, certificats...) requis (pour effectuer avec plus de sécurité) ces transactions ;
- Un code informatique 11 pour prise de décision et/ou prise de contrôle (application logicielle, programme d'analyse de risques, programme d'analyse basé sur des paramètres de configuration d'une politique d'achat (préétablis par l'utilisateur et décrits ultérieurement), règles de transactions notamment d'achat). Ce code 11 conduit à une prise de décision ou contribue à une décision de la transaction (notamment acte d'achat) lorsqu'il est exécuté.

Le code 11 peut être exécuté de façon native, par un interpréteur ou une machine virtuelle VM.

La passerelle comprend un agent d'interface 12 (ou de transit) dont la fonction est de faire connaitre (ou communiquer ou extraire ou soumettre) à l'élément SE (7) (pour traitement à l'aide du code informatique 11 et/ou le cas échéant 9 et 10) des messages ou informations provenant des différents réseaux. L'agent 12 peut être un programme logiciel associé de préférence à des mémoires permanentes ou non (RAM ou EEPROM) ou registre informatique recevant les différents messages de l'extérieur ou de l'intérieur pour expédition sur le réseau.

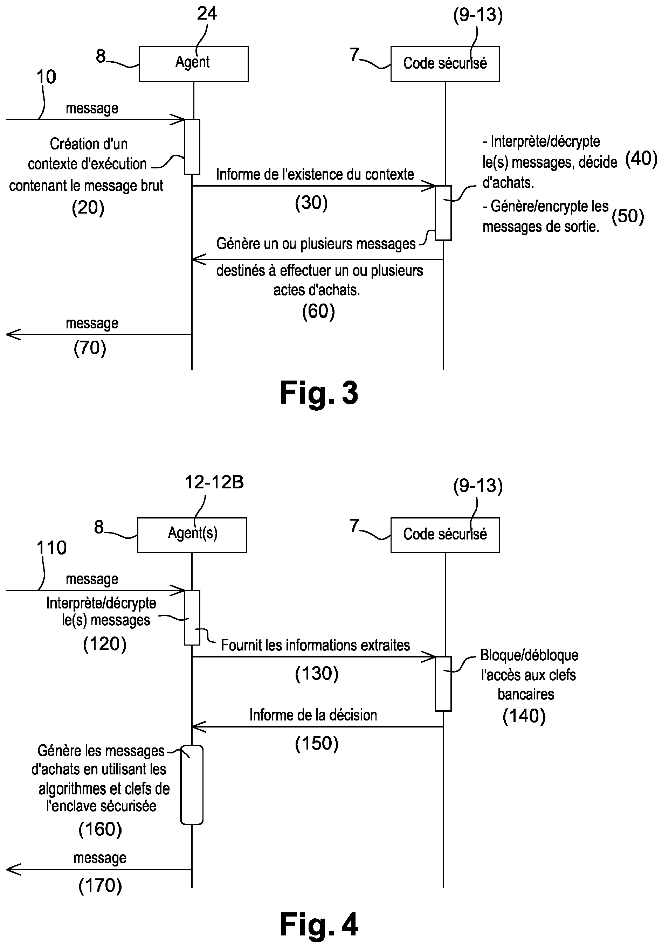

En fonctionnement (fig.3), le processeur 8 de la passerelle peut exécuter cet agent logiciel d'interface 12 pour que l'information soit soumise à l'élément sécurisé 7 pour traitement et/ou pour expédier le message (ou information) vers l'extérieur de la passerelle sur le réseau 3 ou 4.

Le code logiciel 11 est de préférence exécuté dans l'élément sécurisé 7 (appelé aussi code sécurisé par la suite).

Toutefois, il n'est pas exclu que tout ou partie du code 13, 11, 10 soit stocké (de manière chiffrée de préférence) ou exécuté dans la passerelle pour traiter les messages reçus et/ou à expédier notamment pour des questions d'espace mémoire ou de rapidité d'exécution.

### Etapes possibles d'un procédé général

En général, le procédé peut comprendre quatre phases principales ci-après.

### 1) Phase d'inscription (ou d'enrôlement).

La première phase peut consister en l'inscription (ou enrôlement) par une banque de plusieurs façons :
- Une personnalisation de l'élément SE peut s'effectuer en usine selon le procédé utilisé pour les cartes bancaires;
- La passerelle peut exécuter un serveur web. L'utilisateur utilise un navigateur informatique pour entrer les numéros de carte. La passerelle communique avec le réseau bancaire afin de générer les jetons EMV et les mémoriser à l'intérieur de l'élément sécurisé. Le serveur Web peut également être exécuté directement par l'élément sécurisé afin d'assurer une plus grande sécurité de ses données très sensibles. Si l'élément sécurisé est un TEE (« Trusted Execution Environnement » en anglais), il peut aussi prendre en charge la gestion de l'interface utilisateur de façon sécurisée.

- Les numéros bancaires peuvent être collectés via NFC ;
- La passerelle peut être reliée à un appareil photo pour prendre une photo de la carte bancaire ;
- Les données bancaires peuvent être personnalisées à distance à l'intérieur de l'élément sécurisé en utilisant des procédures bien connues impliquant des serveurs TSM.
- La passerelle peut avoir un emplacement dans lequel l'utilisateur peut insérer sa carte bancaire.

L'invention peut prévoir que le système soit capable de gérer plusieurs utilisateurs et plusieurs cartes bancaires. Ces dernières peuvent être mémorisées dans un ou plusieurs éléments sécurisés dans la passerelle (ou un serveur).

### 2) Phase d'appariement (Optionnel).

La deuxième phase peut comprendre une étape d'appariement de l'appareil. Dans cette étape, l'utilisateur apparie les appareils qui sont autorisés à utiliser le mécanisme de paiement (ou de transaction). Ces mécanismes d'appariement dépendent en grande partie du canal de communication utilisé par l'appareil. La plupart de ces protocoles comporte déjà des mécanismes d'authentification et de chiffrement.

L'invention peut également offrir un mécanisme propriétaire s'exécutant au-dessus des protocoles habituels afin d'augmenter la sécurité.

Même si une authentification forte est préférable, l'invention peut prévoir des cas où une authentification faible est suffisante notamment pour des transactions de faibles montants.

### 3) Phase d'écriture / mémorisation des règles ou code de contrôle.

La troisième phase consiste en l'écriture de règles (ou instructions ou codes informatiques). Dans le meilleur des cas, ces règles (instructions ou codes informatiques) sont exécutées par l'élément sécurisé SE. Mais, il peut être acceptable d'exécuter tout ou partie de ces règles à l'intérieur de la passerelle 2 hors de l'élément sécurisé SE.
Ces règles peuvent provenir de différentes sources. Elles peuvent provenir du fabricant de l'appareil, du fabricant de la passerelle, des fournisseurs de services ou de l'utilisateur.

Ces règles permettent de déterminer le comportement du système en cours d'exécution. Une liste non exhaustive des règles peut comprendre une liste des revendeurs autorisés (avec éventuellement un ordre de préférence) ; un total maximum à dépenser par jour, par semaine, par mois, par transaction, par appareil ; une liste des biens et services à acheter ; une période où l'achat est possible ; un montant de la transaction maximale en fonction du niveau d'authentification ; des transactions pour lesquelles une approbation d'utilisateur est nécessaire (selon la nature du bien ou du service acheté, ou le montant de la transaction) ; une acceptation ou un refus automatique de demande d'achat en fonction de l'état d'appariement d'appareils ; des droits d'administration (Qui peut écrire ou modifier des règles).

Certaines règles peuvent également déclencher un achat en fonction des événements sur le réseau.

Ces règles peuvent être modifiées / configurées / provisionnées à distance via un canal sécurisé notamment conformément au standard « Global Platform »

Ces règles peuvent être écrites et mémorisées via une interface utilisateur locale affichée par un écran de la passerelle ou distante 21, servie par exemple par un serveur Web exécuté sur la passerelle. Ce dernier fournissant l'interface utilisateur d'écriture des règles en utilisant par exemple les technologies html et javascript. On peut aussi imaginer d'utiliser un moteur de reconnaissance vocale pour saisir ces règles. La modification des règles peut exiger de préférence, la mise en oeuvre d'une étape d'authentification forte de l'utilisateur / administrateur.

L'utilisateur (ou l'administrateur) peut être de préférence, averti lors de la modification des règles.

Selon un mode de réalisation préféré, les règles sont exécutées à l'intérieur de l'élément sécurisé SE qui agit comme un tiers de confiance.

L'utilisateur peut être capable de lire toutes les règles, même celles qu'il n'a pas écrites. Certaines règles peuvent être en lecture seule. Ces règles peuvent provenir d'un fournisseur d'appareil ou d'un constructeur de passerelle ou du constructeur d'élément sécurisé.

De préférence, l'utilisateur peut lire ces règles, mais pas les modifier. Ces règles peuvent être dictées par certains principes de sécurité (empêcher les utilisateurs d'utiliser des biens non supportés par les appareils), par des accords commerciaux ou par des lois...

La passerelle (ou élément sécurisé) peut exécuter certaines tâches en arrière-plan telles qu'une collecte des prix de service ou de produits de fournisseurs afin d'acheter les biens moins chers.

Enfin, en tant que facteur de confiance tiers, l'élément sécurisé SE peut garantir que ces règles ne peuvent pas être modifiées.

### 4) Phase d'exploitation.

Dans cette phase, l'acte d'achat (ou de transaction) peut être déclenché de trois façons suivantes :
- A) L'appareil peut solliciter un achat, via un protocole dédié, en envoyant un message à la passerelle, le message comprenant la nature et le nombre de biens ou de services ;
- B) La passerelle peut elle-même prendre une décision déclenchée par certains événements envoyés par les appareils (par exemple un message envoyé par l'imprimante indiquant un niveau d'encre faible) ;
- C) L'utilisateur peut également forcer ou déclencher un acte d'achat (ou autre transaction) à travers une interface homme / machine dédiée (un serveur web exécuté par la passerelle par exemple, une application téléphonique ou une interface de montre intelligente, ou des commandes vocales).

En application de règles particulières, la passerelle (qui opère en suivant les règles) peut demander à l'utilisateur d'accepter la transaction. Cela peut être fait par n'importe quel canal notamment par SMS, par une montre intelligente connectée directement ou indirectement à la passerelle, par une application dédiée d'un téléphone intelligent, par synthèse et reconnaissance vocale (exemple Amazon echo™), par page Web.

Les figures 3-5 illustrent des exemples ou étapes de fonctionnement du système selon différents modes de réalisation et/ou mise en oeuvre de l'invention. Selon ces différents modes de réalisations (ou de mise en oeuvre), l'agent logiciel d'interface 12 peut-être plus ou moins intelligent. Ainsi, parmi les modes possibles, on peut trouver deux réalisations extrêmes ci-après influant sur les interactions entre l'agent et l'élément SE.

Selon un premier mode préféré (figure 3) considérant SE très intelligent et l'agent moins:
- A l'étape 10, l'agent 12 reçoit les données brutes (information / message brut) d'un appareil 5-7 et à l'étape 20 ces données sont stockées par la passerelle dans un contexte d'exécution (ou de manière qu'elles puissent être exécutées ou traitée sur place) Le contexte d'exécution peut être crée à cet effet sur le champ (ou avoir été créé au préalable) ;
- A l'étape 30, l'agent logiciel 12 informe l'élément sécurisé 7 (SE) à l'aide notamment d'un signal quelconque qui à réception d'un signal (ou dès que possible) prend la main pour la suite des opérations ;
- A l'étape 40, l'élément 7 (SE) exécute tout ou partie du code sécurisé (13 et/ou le cas échéant 11, 10, 9) pour interpréter et/ou traiter et/ou déchiffrer les données brutes ;
- A l'étape 50, l'élément 7 (SE) exécute tout ou partie du code (pouvant inclure 9-13) pour notamment générer des messages de sortie destinés à effectuer une ou plusieurs transaction(s) (ou achats). Ces messages peuvent être obtenus en fonction des choix (ou options ou décision) résultant de l'exécution de tout ou partie du code (pouvant inclure un traitement et /ou interprétation des données brutes). Ces messages peuvent être chiffrés.

La demande de brevet EP16306343.1, dont la description est incluse par référence, contient une description d'une manière (complémentaire à la présente description) permettant à un élément SE de traiter des informations disponibles ou reçus dans un dispositif hôte, en application d'un programme applicatif. Le traitement peut s'effectuer notamment en créant un contexte d'exécution et en effectuant des interactions avec l'hôte. Ainsi, la description des figures 2 et 3 détaille un dispositif hôte et un ou deux élément(s) SE coopérant ensemble pour exécuter un programme. L'objet des revendications 1 et 10 indiquent les éléments préférés essentiels pour effectuer cette coopération.
- l'élément 7 (SE) peut préparer les messages à être expédiés par la passerelle; Alternativement, SE peut donner des instructions (ou émettre des messages) à l'agent 12 qui vont être interprétés par l'agent 12 ou autre interface de sortie de la passerelle pour effectuer la transaction.
- A l'étape 60, ces messages (ou instructions) reçus de SE, sont transmis à la passerelle, notamment l'agent 12 ici dans l'exemple ;
- A l'étape 70, le message (en vue d'une transaction) est expédié sur le réseau 4 à destination du site marchand SM.
- A l'étape 80 (non représentée), ensuite, un dialogue peut s'établir entre le site marchand et la passerelle pour finaliser la transaction notamment par un échange classique conduisant à utiliser une information de paiement ou de transaction 9, 10 stocké dans l'élément sécurisé. De la même manière que précédemment, l'agent peut relayer les messages reçus à l'élément sécurisé qui les traite en application du programme de contrôle 13 et les messages sont renvoyés sur le site SM pour finalisation notamment en utilisant l'information de transaction 9 ou 10.

A la figure 4 est illustré un second mode de réalisation et/ou de mise en oeuvre qui diffère notamment du précédent en ce sens où l'agent logiciel 12-12B se charge de l'interprétation des messages reçus des appareils 5-7 (considérant l'agent plus intelligent que précédemment et l'élément SE ayant un rôle plus réduit).
Dans cet exemple, l'agent 12-12B comprend une interface logicielle dédiée 12B pour interpréter et fournir à l'élément 7 (SE) des informations extraites (ou interprétées) des messages. Ces informations extraites (ou interprétées) sont soumises pour traitement au code sécurisé 9-13 ; Le code 9-13 prend en fonction de ces données (ou informations), le choix de bloquer ou de débloquer l'accès aux clefs bancaires (ou tout autre information de transaction).
- Ainsi, à l'étape 110, un appareil envoie un message à la passerelle signifiant ou incluant une requête de transaction (le message peut être reçu ou mémorisé provisoirement dans une mémoire tampon ou RAM ou registre dédié) ;
- A l'étape 120, l'agent logiciel d'interface 12 se charge totalement de l'interprétation des messages (notamment en traitant le contenu du message lui-même ou à l'aide d'un logiciel dédié 12B). A cet effet, la passerelle peut comprendre ou utiliser une autre interface logicielle 12B dédiée et configurée pour fournir ou soumettre (étape 130) des informations de requête extraites au code sécurisé de contrôle 13 de l'élément 7 (SE) ;
- A l'étape 140, le code de contrôle 13 peut ainsi traiter les informations de requête reçues en fonction des paramètres ou règles 11 pour conduire à un résultat « R » pouvant être notamment de bloquer ou de débloquer l'accès à des données sensibles (ou informations de transaction telles que celles permettant de donner suite (ou de valider, achever) les transactions ;
- A l'étape 150, l'élément 7 (SE) envoie un message d'information (ou le résultat « R » de traitement) à l'agent 12 ou autre interface de la passerelle qui peut comprendre un jeton EMV provisoire dérivé d'un numéro PAN stocké dans l'élément sécurisé ou un numéro à usage unique OTP ; Alternativement, le message à l'étape 150 peut juste comprendre un accord ou non pour donner suite à la transaction ; cet accord peut être chiffré ; Alternativement encore, le message à l'étape 150 peut comprendre un algorithme de calcul qui sera exécuté avantageusement à l'aide du processeur puissant 8 et large capacité mémoire de la passerelle ; Alternativement encore, le message peut juste comprendre une information de transaction pour compléter ou déverrouiller un algorithme ou un code quelconque (par exemple 12- 12B) présent dans la mémoire de la passerelle et capable de générer un message de transaction prêt à être expédié sur le web ;
- A l'étape 160, l'agent logiciel 12 ou 12B (génère de préférence aux alternatives susvisées) des messages d'achat (ou de transaction) en demandant au SE l'utilisation des clés et/ou algorithmes débloqués dans l'élément sécurisé via une interface logicielle dédiée afin de procéder aux chiffrements ou déchiffrements nécessaires au bon déroulement de la transaction. L'agent peut aussi requérir l'accès à toute autre information nécessaire à la transaction de préférence non sensibles ou des jetons de transaction à usage unique. Ces informations ont pu être transmises avec la décision (ou instruction d'effectuer la transaction de l'étape 150). Par exemple, comme indiqué ci-dessus, un jeton type EMV ou équivalent d'un numéro bancaire (PAN : Primary account number en anglais) à usage unique ou dynamique (et/ou à durée d'utilisation limitée) peut être utilisé.
- A l'étape 170, l'agent 12-12B expédie le ou les message (s) de requête de transaction sur le réseau 4 à destination du site SM. Le message de requête peut comprendre toutes les informations nécessaires à la transaction ou peut s'effectuer en plusieurs temps ou échanges (ex. : connexion / identification / transmission / validation / confirmation).

### Configuration des appareils 5-7 / Répartition des fonctions entre appareils et passerelle 2 (ou serveur 200).

L'invention peut prévoir au moins deux cas distincts d'utilisation ou mise en oeuvre de l'invention ci-après.

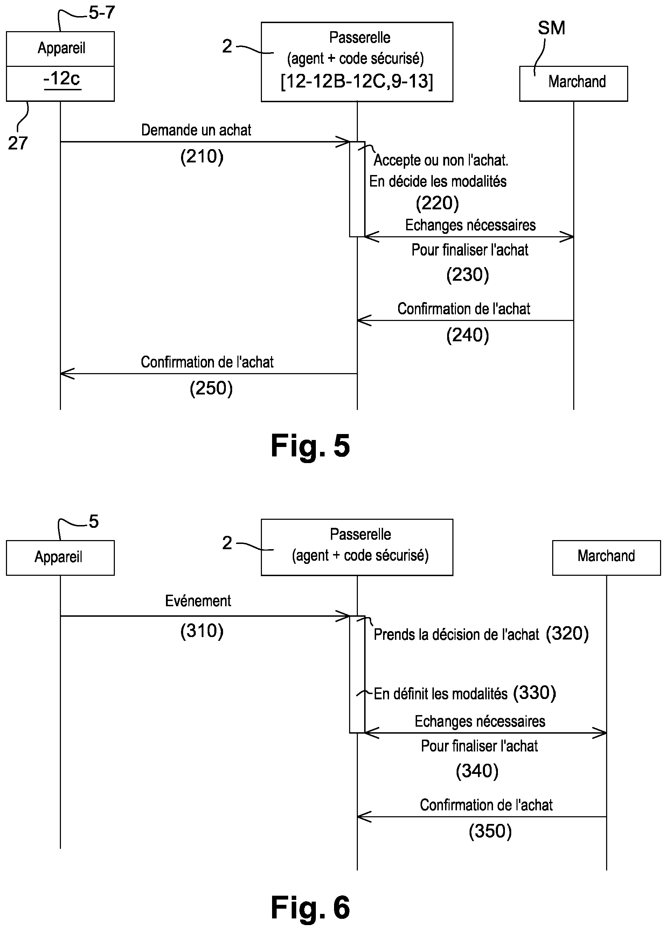

A la figure 5, selon un cas non préféré d'utilisation mais cependant intéressant, les appareils 7-9 peuvent être conçus et configurés de telle façon qu'ils utilisent une interface logicielle 12C prédéfinie mémorisée dans une mémoire permanente 27 interne ou externe (carte à mémoire, clé USB) dite de transaction, autre élément de sécurité SE2). Cette dernière interface 12C peut être fournie par la passerelle (ou apportée par l'utilisateur) afin que chaque appareil puisse décider de son propre chef de l'acte d'achat (ou autre transaction). L'interface logicielle 12C peut être identique ou équivalente en tout ou partie de l'interface logicielle 12-12B contenue dans la passerelle ou dans l'élément de sécurité. Elle peut comprendre tout ou partie du code (et information de transaction) de l'élément sécurisé (9 et/ou 10 et/ou 11 et/ou 13).

Par exemple, d'une part, un appareil 5-7 peut comprendre les règles d'achat (ou de transaction) 11 en mémoire et de préférence également (ou non) un agent identique ou similaire à l'interface 12. D'autre part, l'élément 7 (SE) dans la passerelle, peut quant à lui comprendre les informations de transaction et le cas échéant, les algorithmes bancaires très sensibles et qui nécessitent peu d'espace mémoire. En fait, plus les informations à mémoriser sont sensibles plus ils doivent être préservés dans un environnement de sécurité logiciel et/ou matériel comme dans l'élément 7 (SE).

La passerelle 8 (avec l'élément sécurisé SE) peut assurer un rôle complémentaire de contrôle (validation ou invalidation) de l'acte d'achat (ou de transaction) et/ou les modalités (quantité, qualités, fournisseur, autres paramètres ...) sollicité par un appareil.

Alternativement, la passerelle peut juste assurer une opération minime par exemple très sensible telle qu'une opération de paiement et/ou d'identification et/ou de chiffrement / déchiffrement ou de délivrer un certificat d'authentification en complément du reste des opérations géré par chaque appareil. La passerelle peut donc détenir une seule information (ou très peu) qu'elle délivre en fonction de paramètres qu'elle voit passer à son niveau. Ainsi, grâce à l'invention, la passerelle agit par rapport aux appareils comme un régulateur ou contrôleur de transaction (comme un parent délivrant une autorisation et/ou de l'argent et/ou carte bancaire et/ou données de transactions) vis-à-vis de requêtes d'achat sollicitées par ses enfants si celle-ci sont jugées légitimes ou conformes à des règles.

En fait, selon la complexité et technicité ou niveau de certification des appareils, ces derniers peuvent comprendre tout ou partie des fonctions assurées par la passerelle, notamment les opérations nécessaires pour effectuer une transaction en ligne.

Alternativement, c'est l'appareil qui peut comprendre des droits ou des points nécessaires pour effectuer une transaction, la passerelle ayant le code de contrôle 13 et les règles cadrant les transactions (montant, périodes, listes de site autorisés...).

Par exemple, les appareils peuvent comprendre en mémoire un crédit de points ou d'argent (par exemple par association avec un dispositif à mémoire tel d'une clé USB ou carte à mémoire contenant ces points qui peut s'interfacer avec l'appareil en mode contact ou sans contact).

La passerelle quant à elle, peut effectuer un rôle minime mais essentiel de validation ou non d'une transaction en cours éventuellement en relation avec l'utilisateur via une interface ou appareil externe comme une montre connectée ou un téléphone mobile en relation avec la passerelle.

La validation ci-dessus peut notamment concerner une phase ultime de transaction notamment une confirmation de transaction. Au moins cette dernière phase uniquement peut être transmise à un utilisateur pour information (si les consigné ont été préétablie et disponible dans le système 1) et/ou validation.

Ces points peuvent être des points de fidélité qui sont décomptés au fur et à mesure.
- Ainsi, (pour ce mode moins préféré) à l'étape 210, le procédé peut débuter par l'émission d'une demande d'achat (ou de transaction) ;
- A l'étape 220, la passerelle accepte ou non l'achat en consultant les consignes ou règles 11. Et peut en décider les modalités (par exemple paiement par jeton EMV, PAN, IBAN, identifiant, OTP) ;
- A l'étape 230, le système procède aux échanges nécessaires pour conduire et finaliser la transaction (ici achat) ;
- A l'étape 240, le site SM transmet une confirmation de la transaction qui est retransmise à l'appareil 5-7 terminant ainsi cette opération.

A la figure 6, est illustré un mode préféré de mise en oeuvre alternatif aux opérations ci-dessus de la figure 5. Selon ce mode d'utilisation, les appareils 7-9 ne déclenchent pas l'acte d'achat (ou de transaction) par des requêtes à interpréter / traiter par la passerelle mais produisent des messages élémentaires ou événements (signaux, alerte, bip sonore, lumineux ou autre) qui sont interceptés par la passerelle et sur la base desquels la passerelle déclenche des décisions d'achat pour l'appareil ou pour autre chose mais signalé par l'appareil. (Par exemple, l'appareil peut comprendre un détecteur quelconque communicant)
- Ainsi, à l'étape 310 débute un procédé de transaction. Par exemple, l'appareil (imprimante) peut décider de commander ou signaler des cartouches d'encre à la passerelle s'il elle détecte que l'encre vient à manquer) par détection d'un signal (ou évènement) représentatif d'un faible niveau d'encre dans l'une des cartouches. Le message (évènement) peut comprendre un code spécifique à la cartouche concernée. Ainsi, un besoin d'approvisionnement peut être signalé par une transmission simplement du code de cartouche à destination de la passerelle par l'appareil 5 (imprimante).

Alternativement, le message (évènement) peut être un message d'erreur ou de panne et relatif à une demande de maintenance(ou autre service), la cartouche étant non appropriée ou non lisible malgré qu'elle soit encore chargée d'encre.
- A l'étape 320, la passerelle intercepte le signal relatif à l'évènement susvisé; Elle l'interprète le signal grâce à une comparaison avec un tableau d'évènements mémorisé en mémoire 17 et sur la base de cette comparaison, elle déclenche des décisions d'achat ou de transaction ou de service ;
- A l'étape 330, la passerelle peut définir les modalités de transaction (fournisseur, volume, modalités de paiement) associées à l'évènement localisé dans le tableau de décision qui peut faire partie des régles. Le tableau peut posséder en entrée une liste des événements et/ou signaux et en sortie une instruction ou des modalités de transaction correspondant ;
- A l'étape 340, le système procède à des échanges adéquats avec le site marchand selon les modalités trouvées dans le tableau ;
- A l'étape 350, le site marchand renvoie une confirmation de la transaction. Ce qui met fin aux opérations ou programme.

Bien que décrit en relation avec une passerelle, l'invention peut prévoir de déplacer tout ou partie des moyens matériels et/ou logiciel spécifiques à l'invention et contenus dans la passerelle dans un serveur distant 200 (fig. 1) par exemple détenu par un tiers de confiance certifié.
Ainsi ce serveur peut offrir un service de centralisation de tout ou partie des informations de transaction 90 de chaque utilisateur et/ou des règles propre de transaction 110 et/ou algorithme bancaires 100 et/ou code de contrôle 130.

Le serveur 200 peut ainsi gérer directement un ensemble d'appareils 5-7 et/ou des passerelles 2 pour le compte d'un ensemble d'utilisateur.

En général, un serveur 200 peut comprendre un ordinateur et un programme spécifique servant à faire fonctionner le serveur selon une fonction spécifique, des entrées-sorties et des connexions réseau de communication.

Les règles et paramètres de contrôle ou autre informations peuvent être introduits dans le serveur 200 par chaque utilisateur de manière identique ou quasi identique que s'ils étaient introduits dans la passerelle 20. Le serveur 200 peut ensuite interagir avec tout site marchand SM comme le fait la passerelle dans les modes précédemment décrits.

Chaque utilisateur peut disposer d'un espace sécurisé SE accessible à distance pour gérer l'ensemble de ses appareils notamment à domicile ou hors domicile. Il peut être par exemple sous forme de HSM (Hardware Security Module en anglais signifiant Module Matériel de Sécurité).

Ce dernier mode de réalisation peut être particulièrement utile pour gérer notamment un parc de véhicules communicants. Dans ce cas il peut ne pas exister de passerelle ou de routeur ou Box fixe comme ceux situés à domicile et intervenant dans le système.

Les objets 5-7 peuvent être reliés directement au serveur 200 notamment via un fournisseur d'accès internet et/ou réseau de télécommunication 300 notamment de téléphonie mobile. Les objets peuvent être reliés à la passerelle 2 qui elle-même peut être reliée au serveur 200 via un réseau de communication quelconque 301.

L'utilisateur peut être connecté (via un appareil de communication mobile 21), à la passerelle 2 et/ou un serveur 200 ayant les fonctions de la passerelle (comme développés aux différents modes de réalisation). Cet appareil 21 peut ainsi servir d'interface pour valider une transaction, soumis le cas échéant par une passerelle 2 ou un serveur 200 et concernant une requête de transaction d'un objet connectés.

Le cas échéant, par extension du principe de l'invention, les transactions sont requises non pas par un objet lui-même mais par une personne (notamment un enfant de l'utilisateur EU) à l'aide d'un appareil de la personne (tablette, PDA, téléphone portable, ordinateur). Tout ou partie de la transaction notamment l'étape de validation parvient à la passerelle ou au serveur qui en averti l'utilisateur pour validation.

Ainsi l'invention permet de manière pratique de contrôler et faciliter des transactions d'une manière générale en centralisant les informations de transaction dans un espace sécurisé SE soit dans une passerelle soit dans un serveur.

Ainsi, l'invention permet à plusieurs appareils de donner accès à des informations de transaction notamment un jeton de paiement unique notamment EMV dans un élément sécurisé SE (matériel ou logiciel) qui exécute un programme (ou code) de prise de décision.

L'invention présente un avantage notamment pratique pour l'utilisateur. Il n'a plus à utiliser sa carte de crédit ; ni de remplir les formulaires de chaque site de fournisseur de services avec le numéro PAN de sa carte de crédit; En outre, il peut configurer des règles de transaction avec une granularité assez fine pour chaque appareil (ou chaque personne utilisatrice d'un appareil tel qu'un mobile, ordinateur associé à la personne). Ces règles peuvent être différentes d'un appareil 5-7 à l'autre.

Concernant la sécurité, l'utilisation d'un jeton EMV et d'un élément sécurisé « SE » est une solution très sécurisée. Elle est beaucoup plus sûre que de saisir le numéro de carte de crédit sur un site Web.

L'invention permet de recourir à un élément sécurisé SE dans le domaine de l'internet des objets (IoT) en association avec des passerelles informatiques ou équivalents.

## Revendications

1. Procédé pour sécuriser des transactions électroniques entre des appareils communicants (5-7) et des sites web (SM) à travers une passerelle (2) de communication, **caractérisé en ce qu'**il comprend les étapes suivantes consistant à :
- équiper ladite passerelle (2) ou serveur d'au moins un élément sécurise (SE), ledit élément (SE) comprenant en mémoire (17) une information de transaction et/ou d'identification pour effectuer une transaction et/ou une identification sur les sites web et/ou tout ou partie d'un programme de contrôle pour régir/contrôler lesdites transactions électroniques,
- puis à réaliser automatiquement lesdites transactions (4) en utilisant tout ou partie du programme de contrôle (11, 13) et/ou ladite l'information de paiement (9, 10) et/ou d'identification.

2. Procédé selon la revendication précédente, **caractérisé en ce que** ledit programme de contrôle met en oeuvre des données (9) et/ou un algorithme d'authentification pour authentifier chaque appareil (5-7) lors de requête de transaction.

3. Procédé selon l'une des revendications précédentes, **caractérisé en ce que** le programme de contrôle (13) met en oeuvre une étape de soumission de tout ou partie de la transaction à l'utilisateur via une interface locale et/ou distante via un appareil de communication.

4. Procédé selon l'une des revendications précédentes, **caractérisé en ce que** la passerelle (2) ou serveur (200) comprend un agent logiciel (12, 12B) configuré pour intercepter des requêtes de transaction des appareils (5-7) et pour en donner le contrôle à l'élément sécurisé (SE).

5. Procédé selon l'une des revendications précédentes, **caractérisé en ce que** la passerelle (2) ou serveur (200) comprend un programme (13) traduisant des signaux reçus des appareils sur une interface en requêtes de transactions, le contrôle des demandes de transaction étant confié à l'élément sécurisé (SE).

6. Système pour sécuriser des transactions électroniques entre des appareils communicants (5-7) et des sites web (SM) à travers une passerelle (2) et/ou serveur (200) de communication, **caractérisé en ce qu'**il comprend :
- au moins un élément sécurisé (SE), ledit élément SE comprenant en mémoire (17) une information de transaction (9, 10) et/ou d'identification pour effectuer une transaction et/ou une identification sur les sites web et/ou comprend tout ou partie d'un programme de contrôle (13, 130) pour régir/contrôler lesdites transactions électroniques,
- ledit programme (13, 130) comprenant des instructions configurées pour réaliser automatiquement lesdites transactions (4) en utilisant tout ou partie du programme de contrôle (11, 13) et/ou ladite l'information de paiement (9, 10) et/ou d'identification.

7. Système selon la revendication précédente, **caractérisé en ce qu'**il comprend en mémoire (17, 27) des données et/ou un algorithme d'authentification configurés pour authentifier chaque appareil (5-7) lors de requête de transaction et/ou chaque utilisateur.

8. Système selon l'une des revendications 6 à 7, **caractérisé en ce que** le programme de contrôle (13) comprend des instructions configurées pour soumettre tout ou partie de la transaction à l'utilisateur via une interface locale et/ou distante via un appareil de communication (21).

9. Système selon l'une des revendications 6 à 8, **caractérisé en ce que** la passerelle comprend un agent logiciel (12) configuré pour intercepter les requêtes de transaction des appareils (5-7) et pour en donner le contrôle à l'élément sécurisé (SE).
